# EUROPEAN PATENT APPLICATION

(11) **EP 2 634 744 A1**
(43) Date of publication of application: **04.09.2013**
(21) Application number: 11835877.9
(22) Date of filing: 27.01.2011
(51) Int. Cl.: G06Q 30/06

(54) **SEARCH DEVICE, METHOD FOR CONTROLLING SEARCH DEVICE, PROGRAM, AND INFORMATION STORAGE MEDIUM**

(30) Priority: 27.10.2010 JP 2010240692
(71) Applicant: Rakuten, Inc., Tokyo 140-0002 (JP)
(72) Inventor: SUGIURA, Kazuyo, Tokyo 140-0002 (JP)
(74) Representative: Price, Christopher
(86) International application number: PCT/JP2011/051551
(87) International publication number: WO 2012/056733

(57) **Abstract**

To provide a search device which enables a user to understand a desired product or service even when there are a plurality of types of representation systems for an attribute of the product or service. Attribute storage means (60) stores, in association with identification information of a product or a service, first attribute information representing an attribute of the product or the service by a first representation system. Correspondence relationship storage means (60) stores a correspondence relationship between the first attribute information and second attribute information representing the above-mentioned attribute by a second representation system. Search result acquisition means (62) acquires a search result based on the second attribute information included in a search condition, and storage contents of the correspondence relationship storage means and the attribute storage means. Screen data generation means (63) generates screen data for displaying a screen which shows information relating to a product or a service satisfying the search condition and which shows the user the first attribute information corresponding to the second attribute information included in the search condition.

## Description

### Technical Field

The present invention relates to a search device, a method of controlling a search device, a program, and an information storage medium.

### Background Art

There is known an electronic commerce system for selling products and services via a communication network. Such electronic commerce system enables a user to purchase shoes, clothes, and the like via the communication network (for example, Patent Literature 1).

By the way, in some cases, there is a plurality of types of representation systems for an attribute of a product. For example, there are a plurality of types of representation systems for a size of shoes, clothes, and the like. For example, the size of shoes manufactured or sold by a manufacturer or distributor in Japan is usually represented by numerical values in centimeters, such as "21 cm" to "27 cm". On the other hand, for example, the size of shoes manufactured or sold by a manufacturer or distributor in Europe is usually represented by numerical values, such as "32" to "44".

In view of this, in some electronic commerce systems, a correspondence relationship between the representation system in Japan and the representation system in Europe is retained so that, for example, even when the size is specified by the representation system in Japan as a search condition for the shoes, shoes whose size is represented by the representation system in Europe are included in search results.

### Citation List

### Patent Literature

[Patent Literature 1] JP 2002-245303 A

### Summary of Invention

### Technical Problem

However, in the conventional electronic commerce system, when purchasing the shoes adopting the representation system in Europe, the user is required to specify the size of the shoes with the aid of the size represented by the representation system in Europe. For example, even if the user specifies the size by the representation system in Japan as the search condition for the shoes, when the shoes found as a result adopt the representation system in Europe, the user is required to specify the size of the shoes by the representation system in Europe. As a result, the user may have difficulty in understanding in what size the user should purchase the shoes.

The present invention has been made in view of the above-mentioned problem, and provides a search device, a method of controlling a search device, a program, and an information storage medium which enable a user to understand a desired product or service even when there are a plurality of types of representation systems for an attribute of the product or service.

### Solution to Problem

In order to solve the above-mentioned problem, a search device according to the present invention is a search device to be communicatively connected to a terminal of a user, including: means for acquiring a storage content of attribute storage means for storing, in association with identification information of a product or a service, first attribute information representing an attribute of the product or the service by a first representation system; means for acquiring a storage content of correspondence relationship storage means for storing a correspondence relationship between the first attribute information and second attribute information representing the attribute of the product or the service by a second representation system; search condition acquisition means for acquiring a search condition for the product or the service from the terminal of the user; search result acquisition means for acquiring, in a case where the second attribute information is included in the search condition, a search result for a product or a service satisfying the search condition, based on the second attribute information included in the search condition, the storage content of the correspondence relationship storage means, and the storage content of the attribute storage means; screen data generation means for generating screen data for displaying a screen which shows information relating to the product or the service satisfying the search condition and which shows the user the first attribute information corresponding to the second attribute information included in the search condition; and screen data transmission means for transmitting the screen data to the terminal of the user.

A method of controlling a search device according to the present invention is a method of controlling a search device to be communicatively connected to a terminal of a user, including: a step of acquiring a storage content of attribute storage means for storing, in association with identification information of a product or a service, first attribute information representing an attribute of the product or the service by a first representation system; a step of acquiring a storage content of correspondence relationship storage means for storing a correspondence relationship between the first attribute information and second attribute information representing the attribute of the product or the service by a second representation system; a search condition acquisition step of acquiring a search condition for the product or the service from the terminal of the user; a search result acquisition step of acquiring, in a case where the second attribute information is included in the search condition, a search result for a product or a service satisfying the search condition, based on the second attribute information included in the search condition, the storage content of the correspondence relationship storage means, and the storage content of the attribute storage means; a screen data generation step of generating screen data for displaying a screen which shows information relating to the product or the service satisfying the search condition and which shows the user the first attribute information corresponding to the second attribute information included in the search condition; and a screen data transmission step of transmitting the screen data to the terminal of the user.

A program according to the present invention is a program for causing a computer, which is to be communicatively connected to a terminal of a user, to function as a search device, the program causing the computer to function as: means for acquiring a storage content of attribute storage means for storing, in association with identification information of a product or a service, first attribute information representing an attribute of the product or the service by a first representation system; means for acquiring a storage content of correspondence relationship storage means for storing a correspondence relationship between the first attribute information and second attribute information representing the attribute of the product or the service by a second representation system; search condition acquisition means for acquiring a search condition for the product or the service from the terminal of the user; search result acquisition means for acquiring, in a case where the second attribute information is included in the search condition, a search result for a product or a service satisfying the search condition, based on the second attribute information included in the search condition, the storage content of the correspondence relationship storage means, and the storage content of the attribute storage means; screen data generation means for generating screen data for displaying a screen which shows information relating to the product or the service satisfying the search condition and which shows the user the first attribute information corresponding to the second attribute information included in the search condition; and screen data transmission means for transmitting the screen data to the terminal of the user.

An information storage medium according to the present invention is a computer-readable information storage medium having recorded thereon the above-mentioned program.

According to the present invention, the user is enabled to understand a desired product or service even when there is a plurality of types of representation systems for an attribute of the product or the service.

Further, in an aspect of the present invention, the correspondence relationship storage means may store the correspondence relationship in association with the identification information of the product or the service, and the search result acquisition means may acquire, in the case where the second attribute information is included in the search condition, the search result for the product or the service satisfying the search condition, based on the second attribute information included in the search condition, the correspondence relationship stored in the correspondence relationship storage means in association with the identification information of the product or the service, and the storage content of the attribute storage means.

Further, in an aspect of the present invention, the screen may be a screen for the user to select any one of pieces of the first attribute information which are stored in the attribute storage means in association with the identification information of the product or the service satisfying the search condition, and the screen data generation means may generate the screen data for displaying the screen which is set to a state in which, of the pieces of the first attribute information which are stored in the attribute storage means in association with the identification information of the product or the service satisfying the search condition, a piece of the first attribute information corresponding to the second attribute information included in the search condition is selected in advance.

Further, in an aspect of the present invention, on the screen, pieces of the first attribute information which are stored in the attribute storage means in association with the identification information of the product or the service satisfying the search condition may be displayed, and the screen data generation means may generate the screen data for displaying the screen on which an image for showing the second attribute information included in the search condition is displayed in association with a piece of the first attribute information corresponding to the second attribute information included in the search condition, of the pieces of the first attribute information which are stored in the attribute storage means in association with the identification information of the product or the service satisfying the search condition.

### Brief Description of Drawings

[FIG. 1] A diagram illustrating an overall configuration of an electronic commerce system according to an embodiment of the present invention.
[FIG. 2] A diagram illustrating a hardware configuration of a server.
[FIG. 3] A diagram illustrating an example of a top page screen.
[FIG. 4] A diagram illustrating an example of a search screen.
[FIG. 5] A diagram illustrating an example of a product screen.
[FIG. 6] A functional block diagram of the electronic commerce system according to this embodiment.
[FIG. 7] A diagram showing an example of a product table.
[FIG. 8] A diagram showing an example of a size table.
[FIG. 9] A diagram showing an example of a correspondence relationship table.
[FIG. 10] A chart for illustrating an example of processing executed by the electronic commerce system.
[FIG. 11] A diagram illustrating another example of the product screen.
[FIG. 12] A diagram showing another example of the correspondence relationship table.

### Description of Embodiment

Referring to the drawings, an example of an embodiment of the present invention is now described in detail. A case where the present invention is applied to an electronic commerce system is describedbelow. Specifically, a description is given of an example of a case where a search device according to the embodiment of the present invention is realized in an electronic commerce system which realizes a virtual shopping mall in which a plurality of shops is opened up.

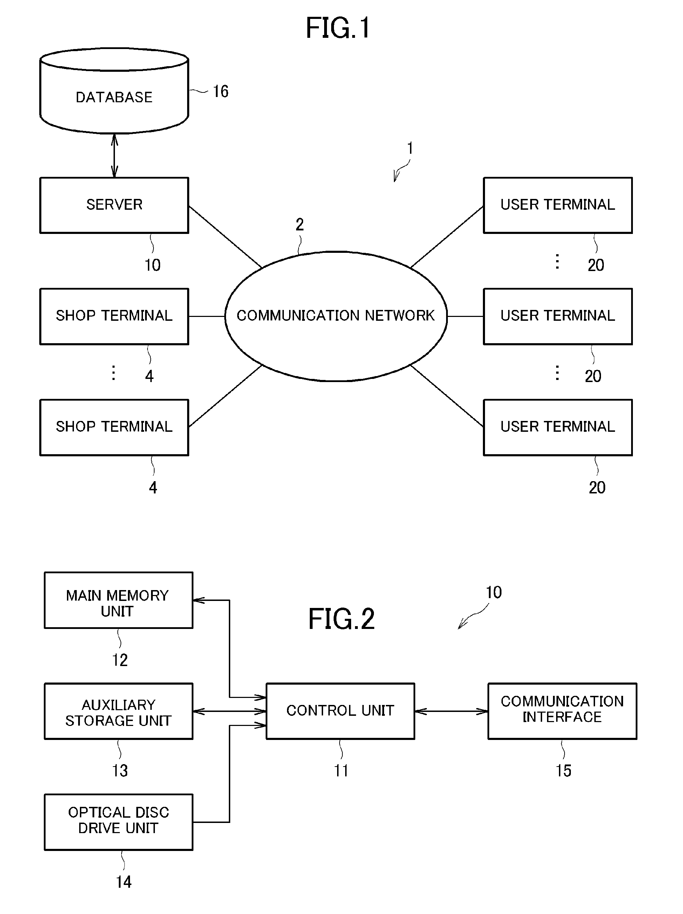

FIG. 1 illustrates an overall configuration of an electronic commerce system according to the embodiment of the present invention. As illustrated in FIG. 1, an electronic commerce system 1 according to this embodiment includes a server 10 (search device), a database 16, a plurality of user terminals 20, andapluralityof shop terminals 4. The server 10, the plurality of user terminals 20, and the plurality of shop terminals 4 are connected to a communication network 2 which includes, for example, the Internet. The server 10 and the user terminal 20 can perform data communication with each other. The server 10 and the shop terminal 4 can also perform data communication with each other.

The server 10 is, for example, a virtual shopping mall server which functions as a portal of the virtual shopping mall. The server 10 executes processing based on a processing request received from the user terminal 20 or the shop terminal 4. FIG. 2 illustrates a hardware configuration of the server 10. As illustrated in FIG. 2, the server 10 includes a control unit 11, a main memory unit 12, an auxiliary storage unit 13, an optical disc drive unit 14, and a communication interface 15.

The control unit 11 includes, for example, a central processing unit (CPU), and executes various kinds of processing in accordance with a program. The main memory unit 12 is, for example, a random access memory (RAM), and the auxiliary storage unit 13 is, for example, a hard disk device. The optical disc drive unit 14 reads a program and data stored in an optical disc. The communication interface 15 is an interface for connecting the server 10 to the communication network 2. Note that, the program and data may be supplied to the server 10 via the optical disc, or may be supplied to the server 10 from a remote location via the communication network 2.

The server 10 can make an access to the database 16. For example, information on a user who uses the virtual shopping mall, information on products which the virtual shopping mall deals in, and information on transactions made in the virtual shopping mall are stored in the database 16. The database 16 may be constructed in the server 10, or may be constructed in a server other than the server 10.

The shop terminal 4 is an information processing device which is provided on a shop opened up in the virtual shopping mall. The shop terminal 4 is, for example, a personal computer. The shop terminal 4 is used for registering information on the product to be sold in the virtual shopping mall and the like to the database 16 via the server 10. For example, a special screen provided from the server 10 is displayed on the shop terminal 4. Through the special screen, an administrator on the shop can input basic information on the product, information relating to a selling method for the product, and the like.

The user terminal 20 is an information processing device which is operated by the user. The user terminal 20 is, for example, a personal computer, a mobile phone, or a personal digital assistant (PDA) .

In the case of this embodiment, for example, a hypertext transfer protocol (HTTP) daemon is activated on the server 10. Further, a browser is activated on the user terminal 20, and a processing request (HTTP request) is transmitted from the user terminal 20 to the server 10 through the browser. Further, a processing result (HTTP response) corresponding to the above-mentioned processing request is transmitted from the server 10 to the user terminal 20. For example, page data described in a web page description language is transmitted to the user terminal 20. Then, based on this page data, a screen based on the processing result is displayed on a display unit of the user terminal 20.

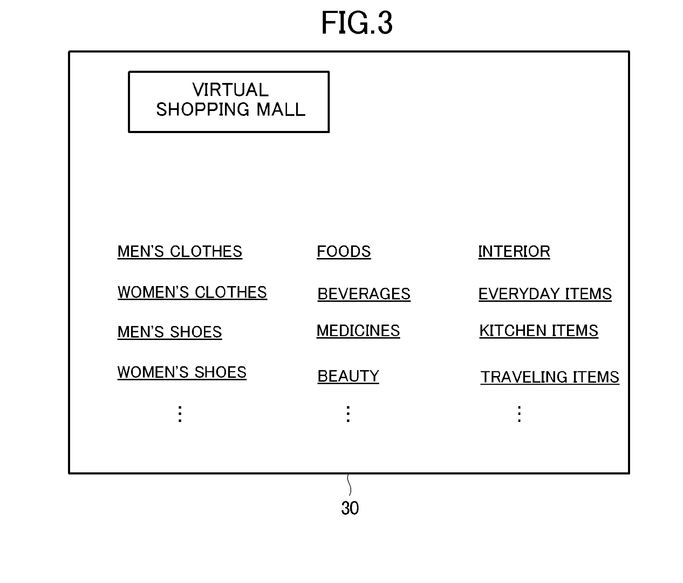

Next, a description is given of an example of a screen which is displayed on the display unit of the user terminal 20 when the user uses the virtual shopping mall. FIGS. 3 to 5 illustrate examples of the screen. Those screens are displayed based on the page data transmitted from the server 10 to the user terminal 20.

When the user who uses the virtual shopping mall makes an access to the server 10 by using the user terminal 20, a top page screen (top page) of the virtual shopping mall is displayed on the display unit of the user terminal 20. FIG. 3 illustrates an example of the top page screen. The user can select a category of the product through a top page screen 30.

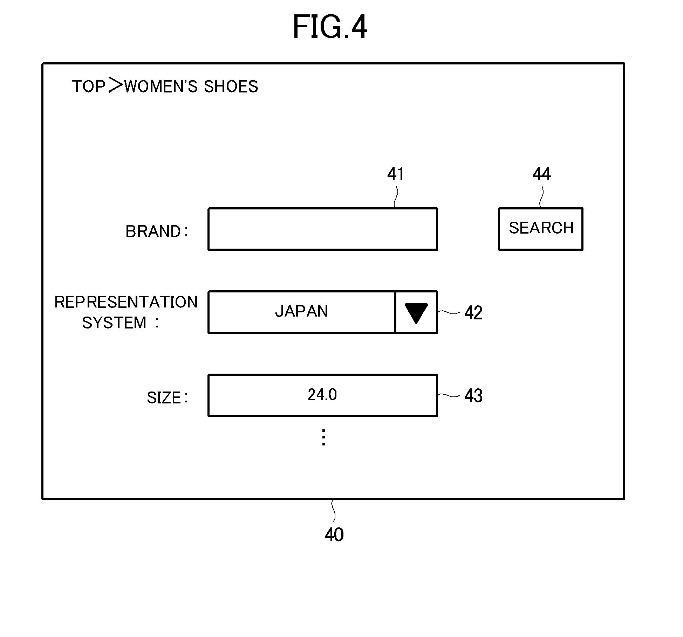

When the user selects the category of the product through the top page screen 30, a search screen for searching for the product belonging to the selected category is displayed on the display unit of the user terminal 20. FIG. 4 illustrates an example of the search screen. FIG. 4 illustrates a search screen 40 displayed when a "women's shoes" category is selected.

The search screen 40 illustrated in FIG. 4 is a screen for specifying a search condition for searching for women's shoes. A brand name input field 41 for inputting a brand name as the search condition is displayed on the search screen 40. Further, a representation system selection field 42 and a size input field 43 which are provided for specifying the size of the shoes as the search condition are displayed on the search screen 40.

The representation system selection field 42 is a field for selecting by what representation system the size of the shoes is to be specified. In FIG. 4, "Japan" is selected. "Japan" represents a representation system which is used mainly in Japan, and is, for example, a representation system which represents the size of the shoes by numerical values in centimeters, such as "21 cm" to "27 cm". In the representation system selection field 42, in addition to "Japan", "Europe", "U.K.", "U.S.", and the like can be selected, for example. "Europe", "U.K.", and "U.S." represent representation systems used mainly in the respective countries or regions. For example, "Europe" represents the representation system used mainly in Europe, and is the representation system which represents the size of the shoes by numerical values, such as "32" to "44", or represents the size of the shoes in a mode in which a character string representing Europe is added to the numerical values, such as "EU32" to "EU44".

Note that, the representation system for the size of the shoes which is used mainly in Japan is hereinafter simply referred to as "Japanese system". Similarly, the representation systems for the size of the shoes which are used mainly in Europe, the U.K., and the U.S. are hereinafter referred to as "European system", "U.K. system", and "U.S. system", respectively.

The size input field 43 is a field for inputting the size of the shoes. In FIG. 4, "24.0" is input therein. In other words, on the search screen 40 illustrated in FIG. 4, as the search condition regarding the size of the shoes, the "24.0" size in the Japanese system is specified.

Note that, items other than the brand name and size of the shoes may also be specified as the search conditions on the search screen 40. For example, the type of shoes or the price range thereof may also be specified as the search condition.

Further, on the search screen 40 illustrated in FIG. 4, the input field for specifying the search condition is provided for each item, but the search conditions regarding a plurality of items may be input in one input field. For example, in a case where the brand name and size of the shoes are specified as the search conditions, the brand name (XXX) and the size (24.0 cm, 38) may be input in one text input field with the brand name and the size being separated by a space, such as "XXX 24.0 cm" or "XXX 38". Note that, in this case, for example, when the size of the shoes such as "24.0 cm" or "24. 0" is input, it may be assumed that the Japanese system is selected as the representation system for the size of the shoes. In the case of the example illustrated in FIG. 4, the "women's shoes" category is selected, and hence it may be assumed on the server 10 side that "24.0 cm" or "24.0" are specified as the size of the shoes. In other words, processing may be performed on the server 10 side that the size suited for the category that is currently selected is input. Similarly, for example, when the size of the shoes such as "38" or "EU38" is input, it may be assumed that the European system is selected as the representation system for the size of the shoes.

When the user clicks a search button 44 of the search screen 40, a search for the product is executed based on the search conditions specified through the search screen 40. Then, a product list screen (product list page: not shown) showing a list of products satisfying the search condition is displayed on the display unit of the user terminal 20. Further, when the user selects any one of the products at the product list screen, a product screen (product page) for purchasing the selected product is displayed on the display unit of the user terminal 20.

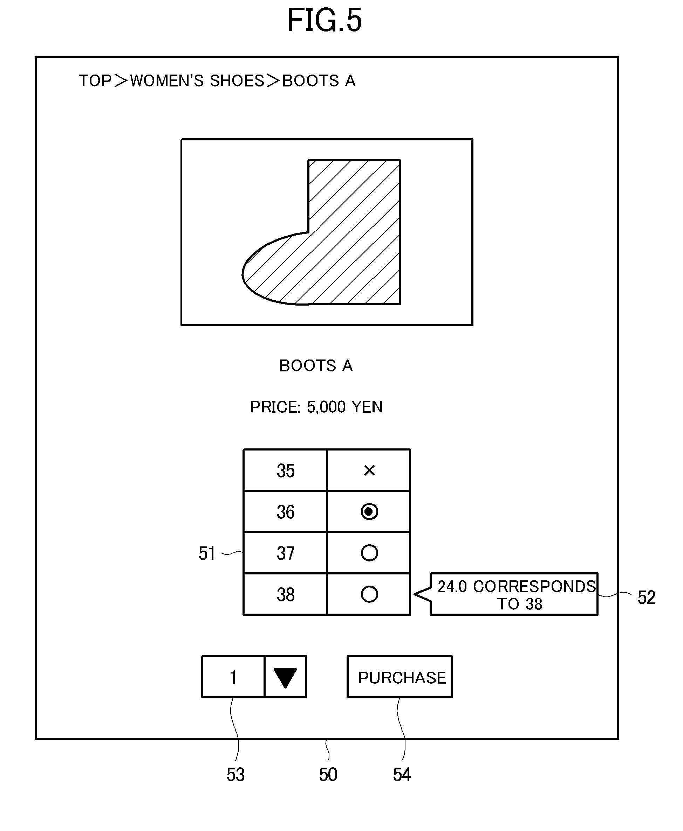

FIG. 5 illustrates an example of the product screen. On a product screen 50 illustrated in FIG. 5, the name, image, and price of the product are displayed. The product screen 50 illustrated in FIG. 5 is a screen for purchasing "boots A".

On the product screen 50, a size selection field 51 is also displayed. The size selection field 51 is a field for selecting a desired size by the user. The size selection field 51 also serves to indicate a stock status of each size. Note that, the size of the boots A is represented by the European system.

In FIG. 5, the cross mark associated with the "35" size indicates that there is no stock. Further, the open circle mark associated with each of the "36" size, the "37" size, and the "38" size represents an option button, which indicates that there is a stock. Those option buttons are buttons for selecting the desired size by the user. At a time point of start of displaying the product screen 50, all the option buttons are in an OFF state (a state of not being selected) . The user causes any one of the option buttons to be in an ON state (a state of being selected), to thereby select the desired size. In FIG. 5, the option button associated with the "36" size is in the ON state, and FIG. 5 illustrates a state in which the user has selected the "36" size.

Note that, at the time point of start of displaying the product screen 50, any one of the option buttons may be automatically set to the ON state. Further, as a mechanism for selecting a desired size by the user, in place of the option buttons, a pull-down menu (or combo box) may be used. Specifically, the user may be allowed to select the desired size from a list of sizes displayed in the pull-down menu (or combo box).

Further, a balloon 52 is displayed on the product screen 50. The balloon 52 is described below. Note that, the representation system adopted for representing an attribute of the shoes is hereinafter referred to as "standard representation system". For example, in the size selection field 51 of the product screen 50 illustrated in FIG. 5, the size of the boots A is represented by the European system, and hence the standard representation system for the boots A is the European system.

The balloon 52 is displayed when the representation system for the size specified as the search condition through the search screen 40 is different from the standard representation system for the shoes. As described above, the standard representation system for the boots A is the European system. On the other hand, at the search screen 40 illustrated in FIG. 4, the size has been specified by the Japanese system as the search condition. In such case, the balloon 52 is displayed on the product screen 50.

The balloon 52 is displayed in association with a size corresponding to the size specified as the search condition (24.0), of the sizes of the boots A (35, 36, 37, and 38). For example, the "24.0" size in the Japanese system corresponds to the "38" size in the European system, and hence on the product screen 50 illustrated in FIG. 5, the balloon 52 is displayed in association with the "38" size. Further, in the balloon 52, a message that the "24.0" size in the Japanese system corresponds to the "38" size in the European system is displayed.

According to the balloon 52, the user can immediately understand what size, of the sizes of the boots a represented by the European system, the size specified by the user by the Japanese system as the search condition corresponds to. In short, it becomes easier for the user to understand his/her desired product, and to purchase the product.

The user who purchases the product selects a quantity in a quantity selection field 53, and clicks a purchase button 54. When the purchase button 54 is clicked, a purchase screen (not shown) for performing a purchasing procedure is displayed on the display unit of the user terminal 20. The user performs the purchasing procedure at the purchase screen.

As described above, in the electronic commerce system 1, when the representation system for the size specified by the user as the search condition is different from the standard representation system for the product, the balloon 52 is displayed on the product screen 50. The balloon 52 serves to show (guide) the user as to what size, of the sizes of the product, the size specified by the user as the search condition corresponds to. According to the balloon 52, the user can immediately understand what size, of the sizes of the product, the size specified by the user as the search condition corresponds to.

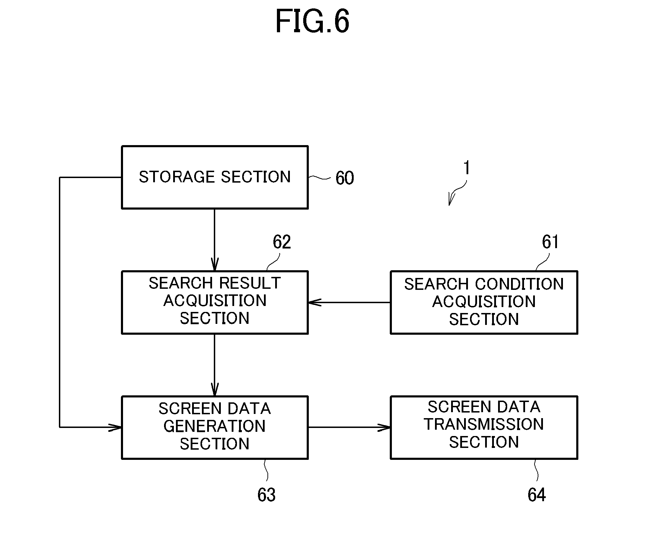

Next, a configuration for realizing the above-mentioned guidance function is described. FIG. 6 is a functional block diagram illustrating functional blocks relating to the above-mentioned guidance function, of functional blocks realized by the electronic commerce system 1. As illustrated in FIG. 6, the electronic commerce system 1 includes a storage section 60, a search condition acquisition section 61, a search result acquisition section 62, a screen data generation section 63, and a screen data transmission section 64.

The storage section 60 is realized by, for example, the database 16. Note that, the storage section 60 may be realized by the database 16 and a storage device other than the database 16 (specifically, a storage device included in another device which is communicatively connected to the server 10 via the communication network 2). Further, the functional blocks other than the storage section 60 are realized by, for example, the server 10. Specifically, the control unit 11 of the server 10 executes a program so that the control unit 11 functions as the search condition acquisition section 61, the search result acquisition section 62, the screen data generation section 63, and the screen data transmission section 64.

First, the storage section 60 is described. The storage section 60 stores various types of data. Note that, data described as being stored in the storage section 60 maybe stored in the database 16, or may be stored in a storage device other than the database 16 (specifically, a storage device included in another device which is communicatively connected to the server 10 via the communication network 2).

The storage section 60 stores, for example, information on the user who uses the virtual shopping mall. The storage section 60 also stores information on a purchase history of each user. Those pieces of information are stored in the storage section 60 as data in a table format.

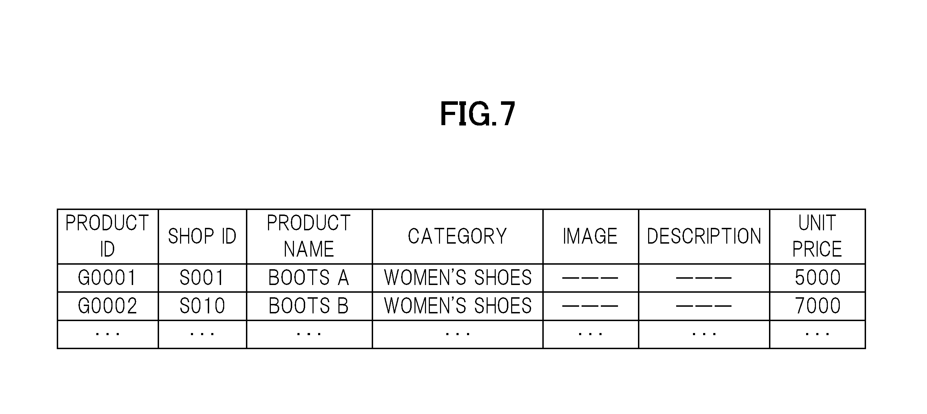

Further, the storage section 60 stores information on the products which the virtual shopping mall deals in. FIG. 7 shows an example of a product table stored in the storage section 60. The product table shown in FIG. 7 includes a "product ID" field, a "shop ID" field, a "product name" field, a "category" field, an "image" field, a "description" field, and a "unit price" field. The "shop ID" field indicates a shop ID of a shop dealing in the product. The "image" field indicates a file name of image data of the product, a location in which the image data is retained, or the like.

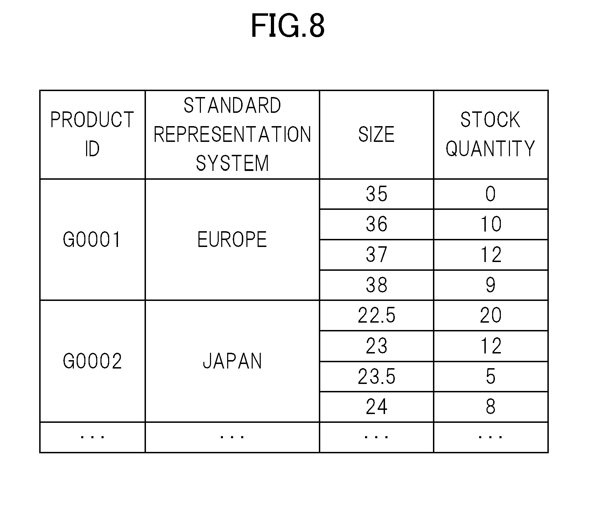

Still further, the storage section 60 (attribute information storage means) stores, in association with the product ID (identification information), first attribute information representing an attribute of the product in a first representation system. The storage section 60 stores, for example, a size table as shown in FIG. 8. The size table shown in FIG. 8 includes a "product ID" field, a "standard representation system" field, a "size" field, and a "stock quantity" field. Types of size of the product and stock quantities for the respective sizes of the product are registered in the size table shown in FIG. 8. In the case of the size table shown in FIG. 8, in association with a product ID "G0001", size information (first attribute information) representing the size (attribute) of the product by the European system (first representation system) is stored.

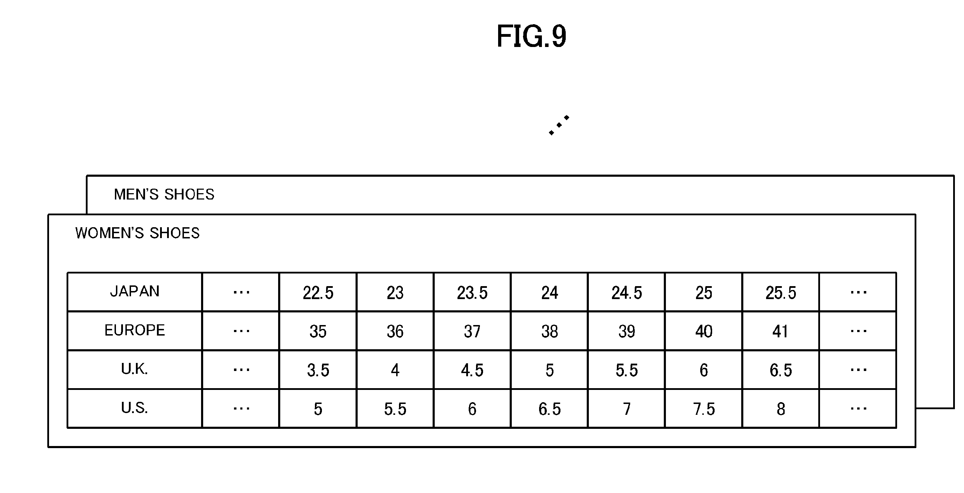

Still further, the storage section 60 (correspondence relationship storage means) stores a correspondence relationship between the first attribute information and second attribute information representing the attribute of the product in a second representation system. The storage section 60 stores, for example, a correspondence relationship table as shown in FIG. 9. The correspondence relationship table shown in FIG. 9 shows a correspondence relationship among a plurality of representation systems. In the case of the correspondence relationship table shown in FIG. 9, the correspondence relationship between the size information (first attribute information) in the European system and size information (second attribute information) representing the size (attribute) of the product by the Japanese system (second representation system) is stored.

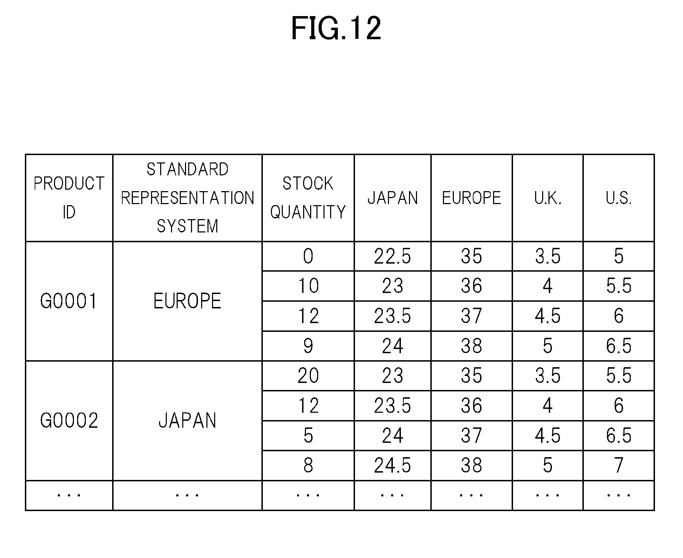

Note that, the correspondence relationship among the plurality of representation systems may be different for each category of the product. Accordingly, the correspondence relationship table may be prepared for each category of the product so that the correspondence relationship is defined for each category of the product. Note that, the correspondence relationship may be defined for each product (see FIG. 12, which is referred to for description later).

Next, the search condition acquisition section 61 and the search result acquisition section 62 are described.

The search condition acquisition section 61 acquires the search condition for the product from the user terminal 20. When the second attribute information is included in the search condition, the search result acquisition section 62 acquires a search result for the product or a service satisfying the search condition, based on the first attribute information stored in association with the product ID, the correspondence relationship between the first attribute information and the second attribute information, and the second attribute information included in the search condition.

For example, when the size information (second attribute information) in the Japanese system is included in the search condition, the search result acquisition section 62 determines whether or not the product whose product ID is "G0001" satisfies the search condition, based on the size information (size information in the European system: the first attribute information) stored in association with the product ID "G0001", the correspondence relationship table, and the size information (size information in the Japanese system: the second attribute information) included in the search condition.

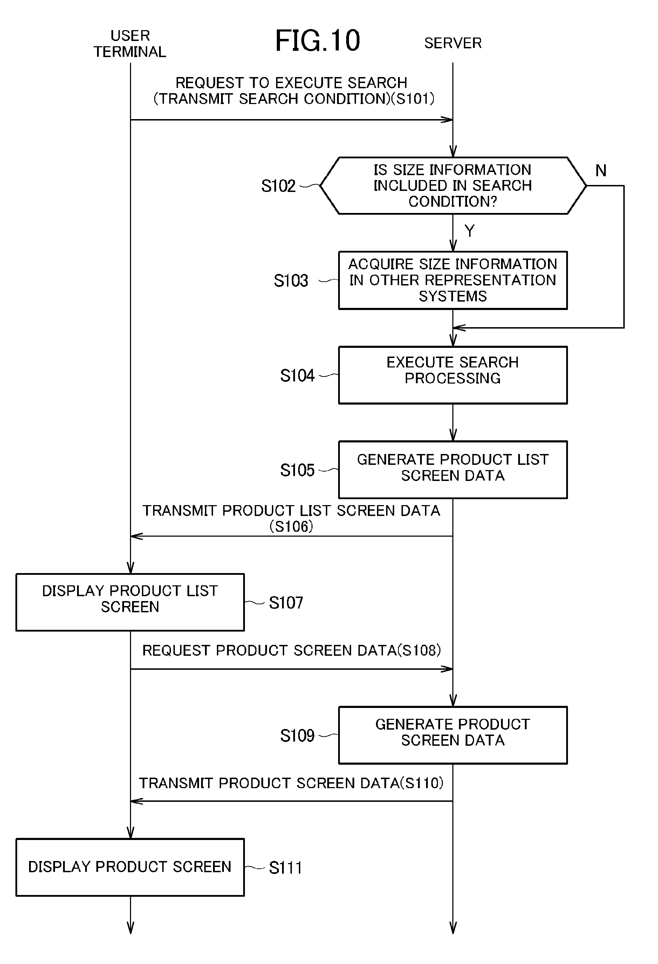

To be specific, for example, with regard to the product whose product ID is "G0001", when there is a stock for the size (for example, 38) in the European system corresponding to the size (for example, 24.0) in the Japanese system specified as the search condition, the search result acquisition section 62 determines that the product satisfies the search condition (see Steps S103 and S104 of FIG. 10, which are described later).

Note that, for example, when the size (for example, 38) in the European system corresponding to the size (for example, 24.0) in the Japanese system specified as the search condition is displayed on the product page (product screen 50) for the product whose product ID is "G0001", the search result acquisition section 62 may determine that the product satisfies the search condition. Specifically, when the size (for example, 38) in the European system corresponding to the size (for example, 24.0) in the Japanese system specified as the search condition is manufactured and sold, even if there is no stock for the size at a current time point, the search result acquisition section 62 may determine that the product satisfies the search condition.

Next, the screen data generation section 63 and the screen data transmission section 64 are described.

The screen data generation section 63 generates screen data for displaying a screen which shows information relating to the product satisfying the search condition and which shows the user the first attribute information corresponding to the second attribute information included in the search condition. For example, the screen data generation section 63 generates product screen data for displaying the product screen 50 as illustrated in FIG. 5. Note that, on the product screen 50 illustrated in FIG. 5, the "38" size (first attribute information) in the European system corresponding to the "24.0" size (second attribute information) in the Japanese system included in the search condition is shown to the user.

The screen data transmission section 64 transmits the screen data to the user terminal 20. For example, the screen data transmission section 64 transmits the product screen data to the user terminal 20.

Now, an operationperformedby the search condition acquisition section 61, the search result acquisition section 62, the screen data generation section 63, and the screen data transmission section 64 is described in more detail. FIG. 10 is a chart for illustrating the operation performed by the above-mentioned functional blocks during a period from when an operation of giving an instruction to execute a search (operation of clicking the search button 44) is performed at the search screen 40 to when the product screen 50 is displayed on the display unit of the user terminal 20.

When the operation of giving an instruction to execute a search (operation of clicking the search button 44) is performed at the search screen 40, as illustrated in FIG. 10, the user terminal 20 requests the server 10 to execute a search (S101). In this case, the user terminal 20 also transmits to the server 10 the search condition specified by the user at the search screen 40.

On the server 10, the search condition acquisition section 61 receives the search condition transmitted from the user terminal 20. The search result acquisition section 62 then determines whether or not the size information is included in the search condition (S102). Then, when the size information is included in the search condition, the search result acquisition section 62 acquires a search result for the product satisfying the search condition, based on the size information included in the search condition, the product table (FIG. 7), the size table (FIG. 8), and the correspondence relationship table (FIG. 9).

To be specific, the search result acquisition section 62 acquires size information in other representation systems corresponding to the size information included in the search condition (S103). For example, a case where the size information included in the search condition is the "24.0" size in the Japanese system is assumed. In this case, the search result acquisition section 62 acquires, based on the size information included in the search condition and the correspondence relationship table (FIG. 9), the following pieces of size information.
(1) "38" size in the European system
(2) "5" size in the U.K. system
(3) "6.5" size in the U.S. system

Thereafter, the search result acquisition section 62 executes search processing (S104). Specifically, the search result acquisition section 62 searches for the product satisfying the search condition based on the size information included in the search condition, the size information acquired in Step S103, and the size table (FIG. 8).

The case where the size information included in the search condition is the "24.0" size in the Japanese system is also assumed here. In this case, the search result acquisition section 62 searches for the product which corresponds to any one of the following products (a) to (d) and which satisfies the search condition other than the size information, based on the size table (FIG. 8).
(a) Product whose standard representation system is the Japanese system and whose stock quantity of the "24.0" size is one or more
(b) Product whose standard representation system is the European system and whose stock quantity of the "38" size is one or more
(c) Product whose standard representation system is the U.K. system and whose stock quantity of the "5" size is one or more
(d) Product whose standard representation system is the U.S. system and whose stock quantity of the "6.5" size is one or more.

Note that, when it is determined in Step S102 that the size information is not included in the search condition, the search result acquisition section 62 searches for the product satisfying the search condition without executing the processing in Step S103.

When a search result for the product satisfying the search condition is acquired, the server 10 generates product list screen data (S105). The product list screen data is data for displaying the product list screen showing the list of products satisfying the search condition.

By the way, the search condition received in Step S101 (to be exact, the size information included in the search condition) is also required in a case of generating the product screen data. This is because the search condition is required for displaying the balloon 52 on the product screen 50. Therefore, such a mechanism that the search condition received in Step S101 can be referred to also in the case of generating the product screen data (Step S109 described later) needs to be prepared.

Accordingly, in Step S105, for example, the server 10 provides a hidden field on the product list screen so that the hidden field retains the search condition received in Step S101. Then, when any one of the products is selected at the product list screen, along with a request for the product screen data, the search condition retained in the hidden field is transmitted to the server 10. In this manner, the search condition received in Step S101 canbe referred to also in the case of generating the product screen data.

Note that, another method can also be adopted as a method for realizing the above-mentioned mechanism. For example, the search condition received in Step S101 may be retained in a cookie so that the search condition retained in the cookie may be referred to when the product screen data is generated. Alternatively, for example, the search condition received in Step S101 may be set to an argument of a URL to the product screen data. Also in this manner, when a request for the product screen data is made, the search condition which is set to the argument can be acquired on the server 10.

After the product list screen data is generated, the server 10 transmits the product list screen data to the user terminal 20 (S106). The user terminal 20 receives the product list screen data, and displays the product list screen on the display unit based on the product list screen data (S107). On the product list screen in this case, the list of products satisfying the search condition specified at the search screen 40 is displayed.

When an operation of selecting any one of the products is performed at the product list screen, the user terminal 20 requests the product screen data on the selected product to the server 10 (S108). Note that, the product selected at the product list screen is hereinafter referred to as "target product".

In this case, in the server 10, the screen data generation section 63 generates the product screen data on the target product (S109). The product screen data is data for displaying the product screen 50 showing information on the target product, and is data for displaying, for example, the product screen 50 as illustrated in FIG. 5.

The product screen 50 is a screen for showing information on the target product. The screen data generation section 63 generates the product screen data based on the product table (FIG. 7) and the size table (FIG. 8). For example, the screen data generation section 63 acquires the name, image, and price of the target product from the product table. Further, the screen data generation section 63 acquires the stock quantity of each size of the target product from the size table. The screen data generation section 63 then sets the size selection field 51 based on the stock quantity of each size of the target product. The screen data generation section 63 makes such settings that for the size whose stock quantity is 0, the cross mark is displayed, and for the size whose stock quantity is one or more, the option button is displayed.

Further, the screen data generation section 63 determines whether or not the balloon 52 is to be displayed on the product screen 50. To be specific, the screen data generation section 63 determines whether or not the size information is included in the search condition acquired in Step S101. When the size information is included in the search condition, the screen data generation section 63 determines whether or not the representation system for the size information included in the search condition is different from the standard representation system for the target product. Then, when those representation systems are different from each other, the screen data generation section 63 determines that the balloon 52 is to be displayed on the product screen 50. Note that, when those representation systems are the same, or when the size information is not included in the search condition, the screen data generation section 63 determines that it is not necessary to display the balloon 52.

When it is determined that the balloon 52 is to be displayed on the product screen 50, the screen data generation section 63 identifies the size in the standard representation system corresponding to the size included in the search condition as a target size. For example, if the size included in the search condition is the "24. 0" size in the Japanese system and the standard representation system for the target product is the European system, the screen data generation section 63 identifies the "38" size as the target size based on the correspondence relationship table (FIG. 9). The screen data generation section 63 then sets the product screen data so that the balloon 52 is displayed in association with the above-mentioned target size, of the sizes listed in the size selection field 51.

Note that, various methods can be adopted as a method for displaying the balloon 52. For example, a method of forming the balloon 52 by using table tags may be adopted. To be specific, the balloon 52 may be formed in the following manner. In any one of cells in an edge portion of a table divided into a plurality of cells, an image showing a triangular portion of the balloon 52 (tail portion of the balloon) is disposed, and a background color of cells corresponding to a body portion of the balloon 52 is set to the same color as that of the image. Further, a character string indicating the content of the balloon 52 is displayed inside the cells corresponding to the body portion of the balloon 52.

As another example, the balloon 52 may be displayed by using Cascading Style Sheets (CSS). As still another example, a program for displaying the balloon 52 may be embedded in the product screen data so that the program is automatically executed when the product screen 50 is displayed. Note that, in this case, the program may be described in a language such as JavaScript (trademark) or the like.

After the product screen data on the target product is generated, the screen data transmission section 64 transmits the product screen data to the user terminal 20 (S110). The user terminal 20 receives the product screen data, and displays the product screen 50 on the display unit based on the product screen data (S111). The processing illustrated in FIG. 10 thus ends.

According to the guidance function (balloon 52) of the electronic commerce system 1 described above, when the representation system for the size specified by the user as the search condition is different from the standard representation system for the product, the user is guided as to what size, of the sizes of the product, the size specified as the search condition corresponds to. As a result, it becomes easier for the user to understand his/her desired product, and to purchase the product.

Note that, the present invention is not limited to the embodiment described above.
(1) For example, in the balloon 52 displayed on the product screen 50, only the size specified by the user as the search condition may be displayed. Alternatively, in place of the balloon 52, an image other than the balloon 52 may be displayed on the product screen 50. Any types of images can be displayed as long as the image serves to show (guide) the user as to what size, of the sizes of the product, the size specified by the user as the search condition corresponds to.

Still alternatively, for example, instead of displaying the balloon 52, the content of the balloon 52 may be displayed in a given position (noticeable position) on the product screen 50. In this manner, the size of the product corresponding to the size specified by the user as the search condition may be shown to the user.

Further, for example, a display mode (for example, color, thickness, or size of a character, and a background color of the character) for the size of the product corresponding to the size specified by the user as the search condition may be different from that for other sizes. In this manner, the size of the product corresponding to the size specifiedby the user as the search condition may be shown to the user.
(2) Further, for example, instead of displaying the balloon 52 on the product screen 50, the option button may be controlled so that the user is guided as to what size, of the sizes of the product, the size specified by the user as the search condition corresponds to.

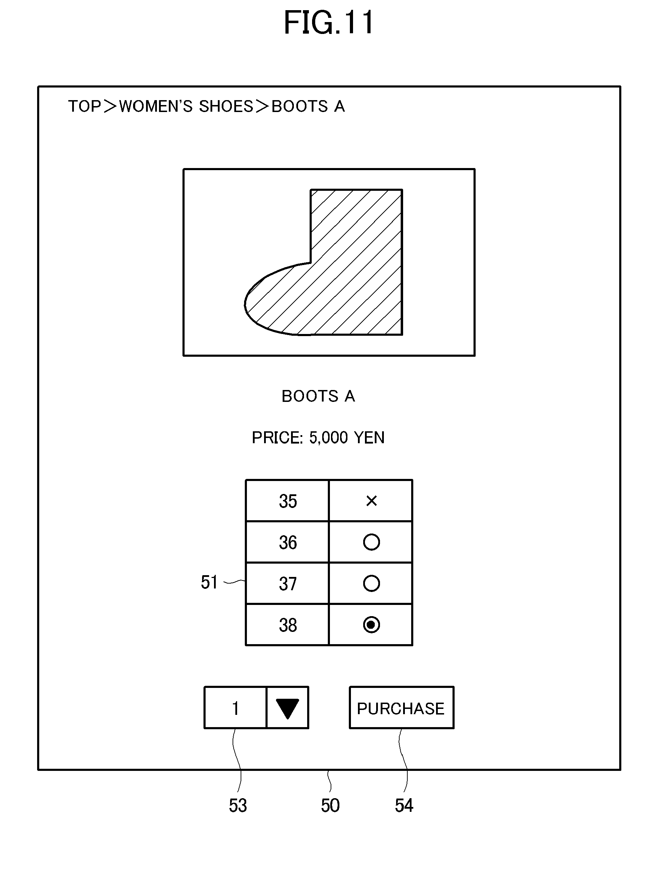

Specifically, the option button for the size of the product corresponding to the size specifiedby the user as the search condition may be set to the ON state in advance. In other words, the product screen 50 may be set to a state in which the size of the product corresponding to the size specifiedby the user as the search condition is selected in advance. An example of the product screen 50 in this case is illustrated in FIG. 11. On the product screen 50 illustrated in FIG. 11, unlike in FIG. 5, the balloon 52 is not displayed in association with the "38" size, and instead of the balloon 52, the option button for the "38" size is already in the ON state at the time point of start of displaying the product screen 50. Note that, the balloon 52 may also be displayed on the product screen 50 illustrated in FIG. 11.
(3) Further, for example, the storage section 60 (correspondence relationship storage means) may store the correspondence relationship among the plurality of representation systems in association with the product ID. Then, when determining whether or not the product satisfies the search condition, the search result acquisition section 62 may use the correspondence relationship associated with the product ID of the product.

FIG. 12 shows another example of the correspondence relationship table stored in the storage section 60. The correspondence relationship table shown in FIG. 12 is such a table that the size table is integrated with the correspondence relationship table.

The correspondence relationship table shown in FIG. 12 includes a "product ID" field, a "standard representation system" field, a "stock quantity" field, a "Japan" field, a "Europe" field, a "U.K." field, and a "U.S." field. The "product ID" field, the "standard representation system" field, and the "stock quantity" field are the same as those of the size table shown in FIG. 8. The "Japan" field indicates the size of the product (shoes) represented by the Japanese system. Similarly, the "Europe" field, the "U.K." field, and the "U.S." field indicate the sizes of the product (shoes) represented by the European system, the U.K. system, and the U.S. system, respectively.

In the correspondence relationship table shown in FIG. 12, the sizes in all the representation systems are stored for each product, and hence, for example, Steps S102 and S103 of FIG. 10 can be omitted. For example, when the size in the Japanese system is specified as the search condition, the product satisfying the search condition may be detected by focusing only on the "Japan" field and the "stock quantity" field of the correspondence relationship table shown in FIG. 12. Moreover, for example, when the size in the European system is specified as the search condition, the product satisfying the search condition may be detected by focusing only on the "Europe" field and the "stock quantity" field of the correspondence relationship table shown in FIG. 12.

Note that, values may be input into only a part of the "Japan" field, the "Europe" field, the "U.K." field, and the "U.S." field. For example, when the virtual shopping mall is provided mainly for the Japanese, values may be input into the "Japan" field and a field corresponding to the standard representation system for the product. For example, when the standard representation system for the product is the European system, values may be input only into the "Japan" field and the "Europe" field.

Further, the correspondence relationship among the plurality of representation systems retained in the correspondence relationship table shown in FIG. 12 may be set, for example, in consideration of the property of an actual product when the shop newly registers the product. In other words, the shop may register the size of the product in the plurality of representation systems.

The correspondence relationship among the plurality of representation systems may be different for each product in many cases. In view of this, in the above-mentioned manner, the correspondence relationship among the plurality of representation systems may be set for each product in consideration of the property of the actual product. As a result, an accuracy of the correspondence relationship among the plurality of representation systems can be enhanced.
(4) The case where a search for the shoes is performed has been mainly described above, but the present invention is also applicable to a case where a search for the product other than the shoes is performed. As with the shoes, there are also a plurality of types of representation systems for the sizes of clothes and accessories, and hence by applying the present invention, it is possible to enable the user to easily purchase the clothes and accessories.

Note that, there may be a plurality of types of representation systems for an attribute other than the size as well. For example, the price (attribute) of the product is represented by the Japanese system (Japanese yen) in some cases, and is represented by the U.S. system (U.S. dollar) in other cases. The present invention is also applicable to such case. Note that, in this case, an exchange rate between Japanese yen and U.S. dollar corresponds to the correspondence relationship between the Japanese system and the U.S. system.

When the present invention is applied to the above-mentioned case, even in a case where the user specifies the price by the Japanese system (Japanese yen) as the search condition, the product whose price is registered by the U.S. system (U.S. dollar) is also searched for. Further, when the representation system for the price specified by the user as the search condition is different from the standard representation system for the price of the product, the fact that the price (Japanese yen) specifiedby the user as the search condition corresponds to the price (U.S. dollar) of the product is explicitly shown to the user. When only the price in the U.S. system (U.S. dollar) is displayed on the product screen 50 although the user specifies the price by the Japanese system (Japanese yen) as the search condition, the user may be confused. In view of this, when such explicit guidance as described above is performed, it is possible to prevent the user from having such confusion.

Further, for example, the name (attribute) of the product is represented by the Japanese system (Japanese) in some cases, and is represented by the U.S. system (English) in other cases as well. The present invention is also applicable to such case. Note that, in this case, a dictionary or the like associating Japanese with English corresponds to the correspondence relationship between the Japanese system and the U.S. system.

When the present invention is applied to the above-mentioned case, even in a case where the user specifies the name by the Japanese system (Japanese) as the search condition, the product whose name is registered by the U.S. system (English) is also searched for. Further, when the representation system for the name specified by the user as the search condition is different from the standard representation system for the name of the product, the fact that the name (Japanese) specified by the user as the search condition corresponds to the name (English) of the product is explicitly shown to the user.
(5) In the electronic commerce system 1, in addition to goods such as clothes and foods (in place of goods such as clothes and foods), for example, data such as electronic book data, music data, and video data may be sold as the product.

Further, in the electronic commerce system 1, in addition to the product (in place of the product), a service may be sold. For example, a ticket or coupon for receiving a service in restaurants, accommodation facilities, or the like may be sold in the electronic commerce system 1. In the electronic commerce system 1, the service and the product can be treated in the same manner, and even when a search for the service is performed, the present invention is applicable. For example, the price (attribute) of the ticket or coupon for receiving a service in domestic or foreign accommodation facilities is represented by the Japanese system (Japanese yen) in some cases, and is represented by a system (local currency) of a corresponding country in other cases. The present invention is also applicable to a search for the service in such case.

## Claims

1. A search device to be communicatively connected to a terminal of a user, comprising:
means for acquiring a storage content of attribute storage means for storing, in association with identification information of a product or a service, first attribute information representing an attribute of the product or the service by a first representation system;
means for acquiring a storage content of correspondence relationship storage means for storing a correspondence relationship between the first attribute information and second attribute information representing the attribute of the product or the service by a second representation system;
search condition acquisition means for acquiring a search condition for the product or the service from the terminal of the user;
search result acquisition means for acquiring, in a case where the second attribute information is included in the search condition, a search result for a product or a service satisfying the search condition, based on the second attribute information included in the search condition, the storage content of the correspondence relationship storage means, and the storage content of the attribute storage means;
screen data generation means for generating screen data for displaying a screen which shows information relating to the product or the service satisfying the search condition and which shows the user the first attribute information corresponding to the second attribute information included in the search condition; and
screen data transmission means for transmitting the screen data to the terminal of the user.

2. The search device according to claim 1,
wherein the correspondence relationship storage means stores the correspondence relationship in association with the identification information of the product or the service, and
wherein the search result acquisition means acquires, in the case where the second attribute information is included in the search condition, the search result for the product or the service satisfying the search condition, based on the second attribute information included in the search condition, the correspondence relationship stored in the correspondence relationship storage means in association with the identification information of the product or the service, and the storage content of the attribute storage means.

3. The search device according to claim 1,
wherein the screen comprises a screen for the user to select any one of pieces of the first attribute information which are stored in the attribute storage means in association with the identification information of the product or the service satisfying the search condition, and
wherein the screen data generation means generates the screen data for displaying the screen which is set to a state in which, of the pieces of the first attribute information which are stored in the attribute storage means in association with the identification information of the product or the service satisfying the search condition, a piece of the first attribute information corresponding to the second attribute information included in the search condition is selected in advance.

4. The search device according to claim 1,
wherein, on the screen, pieces of the first attribute information which are stored in the attribute storage means in association with the identification information of the product or the service satisfying the search condition are displayed, and
wherein the screen data generation means generates the screen data for displaying the screen on which an image for showing the second attribute information included in the search condition is displayed in association with a piece of the first attribute information corresponding to the second attribute information included in the search condition, of the pieces of the first attribute information which are stored in the attribute storage means in association with the identification information of the product or the service satisfying the search condition.

5. A method of controlling a search device to be communicatively connected to a terminal of a user, comprising:
a step of acquiring a storage content of attribute storage means for storing, in association with identification information of a product or a service, first attribute information representing an attribute of the product or the service by a first representation system;
a step of acquiring a storage content of correspondence relationship storage means for storing a correspondence relationship between the first attribute information and second attribute information representing the attribute of the product or the service by a second representation system;
a search condition acquisition step of acquiring a search condition for the product or the service from the terminal of the user;
a search result acquisition step of acquiring, in a case where the second attribute information is included in the search condition, a search result for a product or a service satisfying the search condition, based on the second attribute information included in the search condition, the storage content of the correspondence relationship storage means, and the storage content of the attribute storage means;
a screen data generation step of generating screen data for displaying a screen which shows information relating to the product or the service satisfying the search condition and which shows the user the first attribute information corresponding to the second attribute information included in the search condition; and
a screen data transmission step of transmitting the screen data to the terminal of the user.

6. A program for causing a computer, which is to be communicatively connected to a terminal of a user, to function as a search device, the program causing the computer to function as:
means for acquiring a storage content of attribute storage means for storing, in association with identification information of a product or a service, first attribute information representing an attribute of the product or the service by a first representation system;
means for acquiring a storage content of correspondence relationship storage means for storing a correspondence relationship between the first attribute information and second attribute information representing the attribute of the product or the service by a second representation system;
search condition acquisition means for acquiring a search condition for the product or the service from the terminal of the user;
search result acquisition means for acquiring, in a case where the second attribute information is included in the search condition, a search result for a product or a service satisfying the search condition, based on the second attribute information included in the search condition, the storage content of the correspondence relationship storage means, and the storage content of the attribute storage means;
screen data generation means for generating screen data for displaying a screen which shows information relating to the product or the service satisfying the search condition and which shows the user the first attribute information corresponding to the second attribute information included in the search condition; and
screen data transmission means for transmitting the screen data to the terminal of the user.

7. A computer-readable information storage medium having recorded thereon the program according to claim 6.
